# EUROPÄISCHE PATENTSCHRIFT

(11) **EP 2 565 898 B1**
(45) Veröffentlichungstag und Bekanntmachung des Hinweises auf die Patenterteilung: **04.11.2015**
(21) Anmeldenummer: 11180093.4
(22) Anmeldetag: 05.09.2011
(51) Int. Cl.: H01H 33/56, F16L 25/00, H02B 13/045, H01H 33/02

(54) **Elektrische Schaltanlage**
Electrical switching station
Dispositif de commutation électrique

(43) Veröffentlichungstag der Anmeldung: 06.03.2013
(73) Patentinhaber: Alstom Grid GmbH, 34123 Kassel (DE)
(72) Erfinder: Böhm, Gerrit, 34225 Baunatal (DE); Kraft, David, 34355 Staufenberg (DE)
(74) Vertreter: DREISS Patentanwälte PartG mbB

(56) Entgegenhaltungen:
- EP-A1- 0 964 199
- EP-A2- 2 357 390
- DE-B- 1 243 761
- DE-U1- 20 307 753
- DE-U1-202007 013 841
- US-B1- 6 994 381
- US-B2- 7 100 950

## Beschreibung

Die Erfindung betrifft eine elektrische Schaltanlage nach dem Oberbegriff des Anspruchs 1.

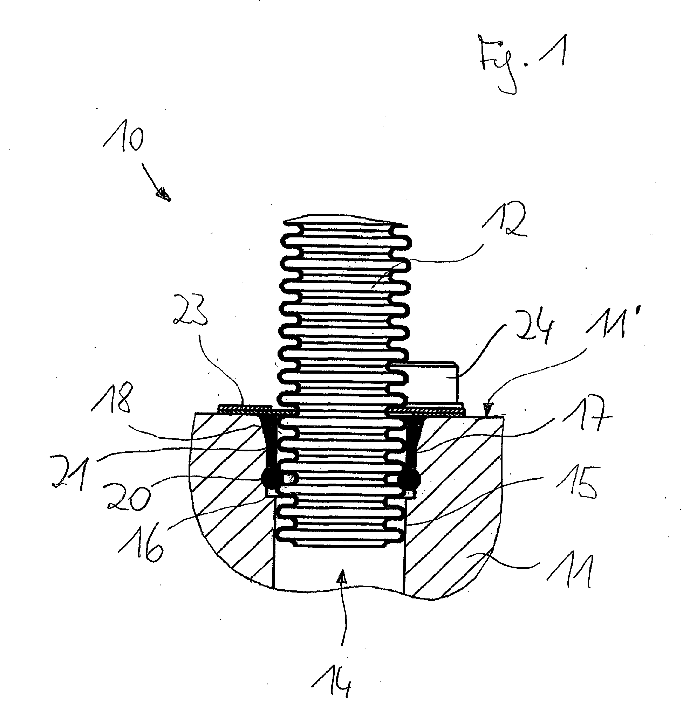

Eine derartige elektrische Schaltanlage ist beispielsweise aus der DE 10 2007 016 720 A1 bekannt. In der dortigen Figur 1 sind die Kurbelkästen von drei Leistungsschalterpolen einer mit Isoliergas gefüllten Hochspannungsschaltanlage dargestellt. Diese Kurbelkästen sind über Rohrverbindungen gasdicht miteinander verbunden.

Es ist bekannt, als Rohrverbindung ein vorgebogenes Kupferrohr zu verwenden. Zum Anschluss des Kupferrohrs an eine in einer Gehäusewand des Kurbelkastens vorhandene Bohrung können Fittings oder dergleichen vorgesehen sein.

Beispielsweise ist es möglich, dass das Kupferrohr mit einer endseitigen Bördelung und einer Überwurfmutter versehen ist. In der Gehäusewand ist eine Gewindebohrung enthalten, in die ein Anschlussteil eingeschraubt ist, auf das die Überwurfmutter aufgeschraubt werden kann. Zwischen der Bördelung des Kupferrohrs und dem Anschlussteil ist ein zylindrisches Zwischenstück angeordnet, auf das ein O-Ring aufgesteckt ist. Der O-Ring ist dazu vorgesehen, eine gasdichte Verbindung zwischen der Bördelung des Kupferrohrs und dem Anschlussteil zu erreichen. Hierzu ist es erforderlich, dass die Bördelung des Kupferrohrs mit einer hohen Genauigkeit und reproduzierbar hergestellt wird. Ersichtlich erfordert das gesamte vorstehend beschriebene Vorgehen einen hohen Aufwand und ist damit kostenintensiv.

Beispielsweise aus der DE 203 07 753 U1 ist es ebenfalls bekannt, als Rohrverbindung einen Wellschlauch einzusetzen. Zum Zwecke des Anschlusses des Wellschlauchs an eine Bohrung in einer Gehäusewand des Kurbelkastens können in diesem Fall entsprechende Fittings oder Anschlussstücke vorhanden sein.

Beispielsweise ist es möglich, dass der Wellschlauch zuerst in der erwünschten Länge abgeschnitten und eine Überwurfmutter über den Wellschlauch geschoben wird. Dann wird das abgeschnittene Ende des Wellschlauchs mit einem Spezialwerkzeug bearbeitet. Insbesondere wird die Schnittfläche des Wellschlauchs mit Hilfe des Spezialwerkzeugs entgratet und zu einer Bördelung gestaucht. Dann wird ein Klemmring in ein Wellental des Wellschlauchs eingesetzt. Danach wird der Wellschlauch mit einem Anschlussteil verschraubt, das in die Gehäusewand eingeschraubt ist. Zwischen das freie Ende des Wellschlauchs und das Zwischenstück wird dabei ein O-Ring eingelegt, der dazu vorgesehen ist, eine gasdichte Verbindung zwischen dem Wellschlauch und dem Anschlussteil zu erreichen. Hierzu ist es erforderlich, dass die Bördelung des Wellschlauchs mit einer hohen Genauigkeit hergestellt ist, und dass die Schnittfläche des Wellschlauchs keine Grate mehr aufweist. Ersichtlich ist das vorstehend beschriebene Vorgehen mit einem hohen Aufwand und damit mit hohen Kosten verbunden.

Aufgabe der Erfindung ist es, eine elektrische Schaltanlage zu schaffen, deren Rohrverbindungen einfacher herzustellen sind.

Die Erfindung löst diese Aufgabe durch eine elektrische Schaltanlage nach dem Anspruch 1.

Es ist ein Gehäuse vorhanden, das mit einer Gehäusewand versehen ist, in der eine Bohrung enthalten ist. Weiterhin ist ein Wellschlauch vorgesehen, der mit der Bohrung gekoppelt ist. Hierzu ist der Wellschlauch in die Bohrung eingesteckt.

Zwischen dem Wellschlauch und der Bohrung ist ein Ringspalt vorhanden, in dem ein O-Ring angeordnet ist, der auf den Wellschlauch aufgesteckt ist. Der O-Ring ist am äußeren Umfang des Wellschlauchs auf ein Wellental des Wellschlauchs aufgesteckt.

Bei der Erfindung sind keine Fittings oder dergleichen erforderlich. Stattdessen wird der abgeschnittene Wellschlauch zusammen mit dem aufgesteckten O-Ring in die Bohrung der Gehäusewand eingesteckt. Damit wird eine Rohrverbindung geschaffen, die einen geringen konstruktiven und fertigungstechnischen Aufwand erfordert, und die einfach und kostengünstig montierbar ist. Insbesondere sind keine Spezialwerkzeuge oder dergleichen zur Bearbeitung des Wellschlauchs erforderlich.

Bei einer vorteilhaften Weiterbildung der Erfindung sind die Abmessungen des Wellschlauchs, der Bohrung sowie des O-Rings derart aufeinander abgestimmt, dass zwischen der Bohrung und dem Wellschlauch eine gasdichte Verbindung entsteht. Eine aufwändige Abdichtung der axialen Schnittfläche des Wellschlauchs ist damit nicht erforderlich. Stattdessen wird die geforderte Dichtheit durch ein festes Anliegen des Umfangs des O-Rings an dem Wellschlauch und in der Bohrung erreicht. Insoweit unterscheidet sich die erfindungsgemäß am Umfang des Wellschlauchs vorgesehene Abdichtung in vorteilhafter Weise von der bekannten, an der Schnittfläche des Wellschlauchs vorhandenen Abdichtung.

Bei einer vorteilhaften Weiterbildung der Erfindung ist in dem Ringspalt eine Buchse angeordnet. Die Buchse kann den Ringspalt entweder im Wesentlichen vollständig oder nur teilweise ausfüllen. Im zweiten Fall kann auf ein "frei" bleibendes Wellental des Wellschlauchs ein zweiter O-Ring aufgesteckt werden. Mit Hilfe der Buchse wird/werden der/die O-Ring/e im Wesentlichen örtlich fixiert.

Bei einer vorteilhaften Weiterbildung der Erfindung ist ein Sicherungsblech vorgesehen, das in ein Wellental des Wellschlauchs eingreift, und das an dem Gehäuse befestigt ist. Mit Hilfe des Sicherungsblechs werden der Wellschlauch und der/die O-Ringe im Wesentlichen örtlich fixiert.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.

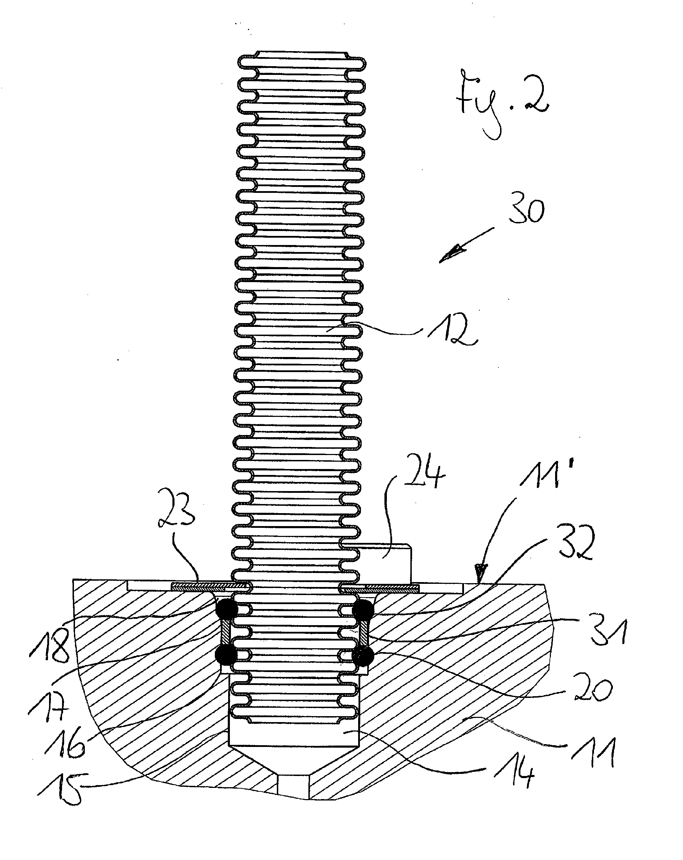

Figur 1 zeigt eine schematische Schnittdarstellung eines ersten Ausführungsbeispiels eines Teils einer elektrischen Schaltanlage mit einem in eine Gehäusewand der Schaltanlage eingesteckten Wellschlauch, und Figur 2 zeigt ein zweites entsprechendes Ausführungsbeispiel.

Eine elektrische Schaltanlage, beispielsweise eine Hochspannungsschaltanlage, kann eine Anzahl von Leistungsschalterpolen oder Trennschalterpolen oder dergleichen aufweisen. Diesen Schaltgerätepolen sind Kurbelkästen zugeordnet, in denen die Antriebsmechanik des jeweiligen Schaltgerätepols untergebracht ist. Beispielsweise zur Überwachung des auf das Isoliergas einwirkenden Drucks sind Rohrverbindungen vorhanden, die an die Schaltgerätepole bzw. an die Kurbelkästen angeschlossen sind. Die Schaltgerätepole, die Kurbelkästen und die Rohrverbindungen sind mit einem Isoliergas gefüllt. Zur näheren Erläuterung derartiger elektrischer Schaltanlagen wird beispielhaft auf die DE 10 2007 016 720 A1 verwiesen.

Ausdrücklich wird darauf hingewiesen, dass es sich bei der elektrischen Schaltanlage auch um jegliche andere Art einer metallgekapselten Schaltanlage oder einer Freiluftschaltanlage handeln kann.

In der Figur 1 ist eine Gehäusewand 11 einer elektrischen Schaltanlage 10 dargestellt. Diese Gehäusewand 11 kann beispielsweise ein Bestandteil eines Kurbelkastens eines Schaltgerätepols der elektrischen Schaltanlage 10 sein.

Ausdrücklich wird darauf hingewiesen, dass die Gehäusewand 11 aber auch ein Bestandteil eines beliebigen anderen Gehäuses oder Gehäuseteils oder einer anderen Komponente der elektrischen Schaltanlage 10 sein kann. Beispielsweise kann es sich bei dem Gehäuse auch um einen von mehreren Gasräumen einer metallgekapselten Schaltanlage handeln.

Die Gehäusewand 11 bzw. das zugehörige Gehäuse besteht vorzugsweise aus Metall.

Weiterhin ist in der Figur 1 ein Wellschlauch 12 dargestellt, der beispielsweise ein Bestandteil einer mit Isoliergas gefüllten Rohrverbindung der elektrischen Schaltanlage 10 sein kann. Der Wellschlauch 12 ist flexibel ausgebildet und kann beispielsweise aus einer korrosionsfesten Metall-Legierung bestehen.

In der Gehäusewand 11 ist eine zylindrische Bohrung 14 vorhanden. Die Bohrung 14 ist etwa lotrecht zur Oberfläche 11' der Gehäusewand 11 ausgerichtet. In einem Bereich 15 besitzt die Bohrung 14 einen Durchmesser, der zumindest so groß oder geringfügig größer ist als der Außendurchmesser des Wellschlauchs 12. Im Verlauf der Bohrung 14 ist ein Absatz 16 vorhanden, an dem sich der Durchmesser verändert. Auf diese Weise entsteht ein Bereich 17 der Bohrung 14 mit einem erweiterten Durchmesser. Dieser Bereich 17 ist benachbart zur Oberfläche 11' der Gehäusewand 11 angeordnet.

Der Wellschlauch 12 ist zylindrisch ausgebildet und weist an seinen Wellenbergen den bereits erwähnten Außendurchmesser auf. In seinen Wellentälern ist der Durchmesser des Wellschlauchs 12 kleiner als der Außendurchmesser.

Der Wellschlauch 12 ist in die Bohrung 14 eingesteckt, und zwar über den gesamten erweiterten Bereich 17 hinweg bis in den Bereich 15 der Bohrung 14. In dem Bereich 15 der Bohrung 14 liegt der Wellschlauch 12 mit seinen Wellenbergen im Wesentlichen an der Innenfläche der Bohrung 14 an, während in dem erweiterten Bereich 17 ein Ringspalt 18 zwischen den Wellenbergen des Wellschlauchs 12 und der Innenfläche der Bohrung 14 vorhanden ist.

In dem Ringspalt 18, und zwar etwa benachbart zu dem Absatz 16, ist ein O-Ring 20 angeordnet. Der O-Ring 20 besteht vorzugsweise aus einem elastischen Material, beispielsweise aus einem Elastomer oder aus Gummi. Der O-Ring 20 ist im Bereich eines Wellentals auf den Wellschlauch 12 aufgesteckt.

Die Abmessungen des Wellschlauchs 12, insbesondere dessen Außendurchmesser, der Durchmesser des Bereichs 17 der Bohrung 14 sowie die Abmessungen des O-Rings 20 sind derart aufeinander abgestimmt, dass zwischen dem O-Ring 20 und der Bohrung 14 einerseits sowie zwischen dem O-Ring 20 und dem Wellschlauch 12 andererseits eine gasdichte Verbindung entsteht. Dies ist gleichbedeutend damit, dass der O-Ring 20 eine gasdichte Abdichtung zwischen der Bohrung 14 und dem Wellschlauch 12 herstellt.

In dem Ringspalt 18, und zwar zwischen dem O-Ring 20 und der Oberfläche 11' der Gehäusewand 11, ist eine Buchse 21 angeordnet. Die Buchse 21 kann beispielsweise aus einem Kunststoff oder aus einem Elastomer, beispielsweise aus Gummi, oder auch aus Metall bestehen. Die axiale Länge der Buchse 21 ist derart vorgesehen, dass der Ringspalt 18 in axialer Richtung zumindest weitgehend oder im Wesentlichen vollständig von der Buchse 21 ausgefüllt ist.

An der Oberfläche 11' der Gehäusewand 11 ist zumindest ein Sicherungsblech 23 angeordnet. Das Sicherungsblech 23 kann beispielsweise die Form eines halben Ringes aufweisen. Zumindest teilweise greift das Sicherungsblech 23 in ein Wellental des Wellschlauchs 12 ein. In dieser Position ist das Sicherungsblech 23 mit Hilfe einer Schraube 24 mit der Gehäusewand 11 fest verbunden.

Der benachbart zur Oberfläche 11' der Gehäusewand 11 angeordnete Bereich 17 der Bohrung 14 kann eine Einführschräge aufweisen. Dies bedeutet, dass der Durchmesser des Bereichs 17 in Richtung zur Oberfläche 11' sich geringfügig vergrößert. Diese Einführschräge erleichtert das Einführen des Wellschlauchs 12 mit dem aufgesteckten O-Ring 20 in die Bohrung 14 und vereinfacht damit den Montagevorgang.

Wie bereits erläutert wurde, wird durch den O-Ring 20 eine gasdichte Verbindung zwischen der Bohrung 14 und dem Wellschlauch 12 zur Verfügung gestellt. Mit Hilfe der Buchse 21 und des Sicherungsblechs 23 wird erreicht, dass der O-Ring 20 innerhalb des Ringspalts 18 im Wesentlichen örtlich fixiert ist. Insbesondere kann sich der O-Ring 20 in dem Ringspalt 18 nicht in Richtung zu der Oberfläche 11' der Gehäusewand 11 bewegen. Weiterhin verhindert die Buchse 21 ein Eindringen von Schmutz und gegebenenfalls von Wasser in den Ringspalt 18. Mit Hilfe des in ein Wellental eingreifenden Sicherungsblechs 23 wird erreicht, dass der Wellschlauch 12 innerhalb der Bohrung 14 im Wesentlichen fixiert ist. Insbesondere kann sich der Wellschlauch 12 nicht aus der Bohrung 14 heraus bewegen.

Die Figur 2 entspricht weitgehend der Figur 1. Gleichartige Bauteile oder Merkmale der Figur 2 sind deshalb mit denselben Bezugszeichen gekennzeichnet wie in der Figur 1. Hinsichtlich der Beschreibung dieser Bauteile und Merkmale wird vollumfänglich auf die vorstehenden Erläuterungen der Figur 1 verwiesen.

Wie in der Figur 1, so ist auch in der Figur 2 der O-Ring 20 dazu vorgesehen, eine gasdichte Verbindung zwischen dem Wellschlauch 12 und der Bohrung 14 bereitzustellen. Im Unterschied zur Figur 1 ist die Buchse 21 der Figur 1 in der Figur 2 jedoch andersartig ausgebildet.

So ist in der Figur 2 eine Buchse 31 in dem Ringspalt 18 angeordnet, die den Ringspalt 18 in axialer Richtung nicht vollständig ausfüllt. Stattdessen ist die axiale Länge der Buchse 31 derart vorgesehen, dass, benachbart zu der Oberfläche 11' der Gehäusewand 11, ein Wellental des Wellschlauchs 12 noch "frei" bleibt. Auf dieses Wellental ist ein zweiter O-Ring 32 auf den Wellschlauch 12 aufgesteckt. Dieser zweite O-Ring 32 ist damit innerhalb des Ringspalts 18 angeordnet, und zwar benachbart zu der Oberfläche 11' der Gehäusewand 11.

Der erste O-Ring 20 und der zweite O-Ring 32 weisen in Längsrichtung einen Abstand zueinander auf, der im Wesentlichen der axialen Länge der Buchse 31 entspricht.

In vergleichbarer Weise wie bei dem ersten O-Ring 20, so sind auch bei dem zweiten O-Ring 32 die Abmessungen des Wellschlauchs 12, der Durchmesser des Bereichs 17 der Bohrung 14 einschließlich der gegebenenfalls vorhandenen Einführschräge sowie die Abmessungen des O-Rings 32 derart aufeinander abgestimmt, dass zwischen dem O-Ring 32 und der Bohrung 14 einerseits sowie zwischen dem O-Ring 32 und dem Wellschlauch 12 andererseits zumindest eine wasser- und schmutzdichte Verbindung entsteht.

Gegebenenfalls kann der zweite O-Ring 32 auch derart ausgebildet sein, dass sich eine gasdichte Verbindung ergibt. In diesem Fall kann der erste O-Ring 20 gegebenenfalls entfallen.

Wie erläutert wurde, wird durch die beiden O-Ringe 20, 32 - einzeln oder gemeinsam - eine gasdichte Verbindung zwischen der Bohrung 14 und dem Wellschlauch 12 zur Verfügung gestellt. Mit Hilfe der Buchse 31, des zweiten O-Rings 32 und des Sicherungsblechs 23 wird erreicht, dass der erste O-Ring 20 innerhalb des Ringspalts 18 im Wesentlichen örtlich fixiert ist. Insbesondere kann sich der erste O-Ring 20 in dem Ringspalt 18 nicht in Richtung zu der Oberfläche 11' der Gehäusewand 11 bewegen. Mit Hilfe des zweiten O-Rings 32 wird ein Eindringen von Wasser und Schmutz in den Ringspalt 18 verhindert. Der zweite O-Ring 32 wird dabei durch die Buchse 31 und das Sicherungsblech 23 im Wesentlichen örtlich fixiert. Mit Hilfe des in ein Wellental eingreifenden Sicherungsblechs 23 wird erreicht, dass der Wellschlauch 12 innerhalb der Bohrung 14 im Wesentlichen fixiert ist.

Die vorstehend anhand der Figuren 1 und 2 erläuterten Ausführungsbeispiele für einen Anschluss des Wellschlauchs 12 in der Bohrung 14 der Gehäusewand 11 erfordern keine Fittings oder dergleichen, die in irgendeiner Weise angelötet oder angeschweißt werden müssten. Die Länge des Wellschlauchs 12 kann jeweils in beliebiger Weise gewählt und der Wellschlauch 12 entsprechend abgeschnitten werden. Die entstehende ringförmige Schnittfläche des Wellschlauchs 12 bildet dabei keine Dichtfläche und muss daher nicht bearbeitet werden. Besondere Spezialwerkzeuge oder dergleichen sind nicht erforderlich. Stattdessen wird ein Wellental des Wellschlauchs als Dichtfläche verwendet. Dies ermöglicht eine sehr einfache und kostengünstige Montage, wobei durch eine entsprechende Dimensionierung des/der O-Rings/O-Ringe eine erwünschte Dichtigkeit auf einfache und kostengünstige Weise erreichbar ist.

Es wird darauf hingewiesen, dass die beschriebenen Ausführungsbeispiele für einen Anschluss des Wellschlauchs 12 in der Bohrung 14 der Gehäusewand 11 nicht zwingend gasdicht ausgebildet sein müssen. Stattdessen können die beschriebenen Anschlussmöglichkeiten in gleicher Weise auch bei Anwendungen verwendet werden, bei denen kein Isoliergas vorhanden ist, oder bei denen aus sonstigen Gründen keine gasdichte Verbindung erforderlich ist.

## Patentansprüche

1. Elektrische Schaltanlage (10, 30), insbesondere Hochspannungsschaltanlage, mit einem Gehäuse, das mit einer Gehäusewand (11) versehen ist, in der eine Bohrung (14) enthalten ist, sowie mit einem Wellschlauch (12), der mit der Bohrung (14) gekoppelt ist, **dadurch gekennzeichnet, dass** der Wellschlauch (12) in die Bohrung (14) eingesteckt ist, dass zwischen dem Wellschlauch (12) und der Bohrung (14) ein Ringspalt (18) vorhanden ist, dass in dem Ringspalt (18) ein O-Ring (20, 32) angeordnet ist, der auf den Wellschlauch (12) aufgesteckt ist, dass der O-Ring (20, 32) an der Außenwand des Wellschlauchs (12) angeordnet und auf ein Wellental des Wellschlauchs (12) aufgesteckt ist, und dass der O-Ring (20, 32) nicht auf dem Grund des Wellentals angeordnet ist, sondern ausgehend von dem äußeren Umfang der Außenwand des Wellschlauchs (12) nur teilweise in das Wellental hineinragt.

2. Schaltanlage (10, 30) nach Anspruch 1, wobei die Abmessungen des Wellschlauchs (12), der Bohrung (14) sowie des O-Rings (20, 32) derart aufeinander abgestimmt sind, dass zwischen der Bohrung (14) und dem Wellschlauch (12) eine gasdichte Verbindung entsteht.

3. Schaltanlage (10, 30) nach einem der vorstehenden Ansprüche, wobei in dem Ringspalt (18) eine Buchse (21, 31) angeordnet ist.

4. Schaltanlage (10) nach Anspruch 3, wobei die axiale Länge der Buchse (21) derart vorgesehen ist, dass der Ringspalt (18) in axialer Richtung zumindest weitgehend oder im Wesentlichen vollständig von der Buchse (21) ausgefüllt ist.

5. Schaltanlage (30) nach Anspruch 3, wobei zwei O-Ringe (20, 32) in dem Ringspalt (18) vorgesehen sind, die in Längsrichtung einen Abstand zueinander aufweisen, wobei die Buchse (31) zwischen den beiden O-Ringen (20, 32) vorhanden ist, und wobei die axiale Länge der Buchse (31) im Wesentlichen dem Abstand der beiden O-Ringe (20, 32) entspricht.

6. Schaltanlage (10, 30) nach einem der vorstehenden Ansprüche, wobei ein Sicherungsblech (23) vorgesehen ist, das in ein Wellental des Wellschlauchs (12) eingreift, und das an dem Gehäuse befestigt ist.

7. Schaltanlage (10, 30) nach einem der vorstehenden Ansprüche, wobei der Wellschlauch (12) flexibel ausgebildet ist und insbesondere aus einer korrosionsfesten Metall-Legierung besteht.

8. Schaltanlage (10, 30) nach einem der vorstehenden Ansprüche, wobei der/die O-Ring/e (20, 32) aus einem elastischen Material, insbesondere aus einem Elastomer oder aus Gummi besteht/bestehen.

9. Schaltanlage (10, 30) nach einem der vorstehenden Ansprüche, wobei es sich bei dem Gehäuse um einen Kurbelkasten eines Schaltgerätepols handelt.

## Claims

1. An electrical switch system (10, 30), in particular a high-voltage switch system, having a housing that is provided with a housing wall (11) that includes a bore (14), and having a corrugated hose (12) that is coupled to the bore (14), **characterized in that** there is an annular gap (18) between the corrugated hose (12) and the bore (14); that an O-ring (20, 32) that is slipped onto the corrugated hose (12) is located in the annular gap (18); that the O-ring (20, 32) is located on the outer wall of the corrugated hose (12) and is slipped onto a trough of the corrugated hose (12); and that the O-ring (20, 32) is not located on the base of the trough but instead, beginning at the outer circumference of the outer wall of the corrugated hose (12), extends only partway into the trough.

2. The switch system (10, 30) of claim 1, wherein the dimensions of the corrugated hose (12), of the bore (14), and of the O-ring (20, 32) are adapted to one another such that a gastight connection is established between the bore (14) and the corrugated hose (12).

3. The switch system (10, 30) of one of the foregoing claims, wherein a bush (21, 31) is located in the annular gap (18).

4. The switch system (10) of claim 3, wherein the axial length of the bush (21) is provided such that in the axial direction, the annular gap (18) is at least extensively or substantially completely by the bush (21).

5. The switch system (30) of claim 3, wherein two O-rings (20, 32), which are spaced apart from one another in the longitudinal direction, are provided in the annular gap (18), and the bush (31) is present between the two O-rings (20, 32), and the axial length of the bush (31) is substantially equivalent to the spacing of the two O-rings (20, 32).

6. The switch system (10, 30) of one of the foregoing claims, wherein a safety plate (23) is provided, which engages a trough of the corrugated hose (12) and is secured to the housing.

7. The switch system (10, 30) of one of the foregoing claims, wherein the corrugated hose (12) is embodied as being flexible and in particular comprises a corrosion-proof metal alloy.

8. The switch system (10, 30) of one of the foregoing claims, wherein the O-ring or O-rings (20, 32) comprise an elastic material, in particular an elastomer or rubber.

9. The switch system (10, 30) of one of the foregoing claims, wherein the housing is a crankcase of a switchgear terminal.

## Revendications

1. Installation de distribution électrique (10, 30), en particulier installation de distribution à haute tension, comprenant un boîtier pourvu d'une paroi (11) dans laquelle est ménagé un trou (14), comprenant également un tuyau ondulé flexible (12) qui est couplé au trou (14), **caractérisée en ce que** le tuyau ondulé (12) est inséré dans le trou (14), **en ce qu'**il y a entre le tuyau ondulé (12) et le trou (14) un espace annulaire (18), **en ce qu'**il est agencé dans l'espace annulaire (18) un joint torique (20, 32) qui est monté sur le tuyau ondulé (12), **en ce que** le joint torique (20, 32) est agencé sur la paroi extérieure du tuyau ondulé (12) et est inséré sur un creux du tuyau ondulé (12), et **en ce que** le joint torique (20, 32) n'est pas agencé au fond du creux, mais à partir du pourtour extérieur de la paroi extérieure du tuyau ondulé (12) pour ne pénétrer que partiellement dans le creux.

2. Installation de distribution (10, 30) selon la revendication 1, dans laquelle les dimensions du tuyau ondulé (12), du trou (14) et du joint torique (20, 32) sont ajustées entre elles de façon à ce qu'il en résulte une liaison étanche aux gaz entre le trou (14) et le tuyau ondulé (12).

3. Installation de distribution (10, 30) selon l'une des revendications précédentes, dans laquelle il est agencé dans l'espace annulaire (18) une douille (21, 31).

4. Installation de distribution (10) selon la revendication 3, dans laquelle la longueur axiale de la douille (21) est prévue de façon à ce que l'espace annulaire (18) dans le sens axial soit rempli au moins largement ou sensiblement complètement par la douille (21).

5. Installation de distribution (30) selon la revendication 3, dans laquelle il est prévu dans l'espace annulaire (18) deux joints toriques (20, 32) à distance l'un de l'autre dans le sens longitudinal, la douille (31) étant installée entre les deux joints toriques (20, 32) et la longueur axiale de la douille (31) correspondant pour l'essentiel à la distance entre les deux joints toriques (20, 32).

6. Installation de distribution (10, 30) selon l'une des revendications précédentes, dans laquelle il est prévu une rondelle d'arrêt (23) venant se mettre en prise dans un creux du tuyau ondulé (12) et qui est fixée au boîtier.

7. Installation de distribution (10, 30) selon l'une des revendications précédentes, dans laquelle le tuyau ondulé (12) est réalisé flexible et est composé en particulier d'un alliage métallique résistant à la corrosion.

8. Installation de distribution (10, 30) selon l'une des revendications précédentes, dans laquelle le(s) joint(s) torique(s) (20, 32) est/sont composé(s) d'un matériau élastique, en particulier d'un élastomère ou d'un caoutchouc.

9. Installation de distribution (10, 30) selon l'une des revendications précédentes, dans laquelle le boitier est un carter d'un appareil de commutation.
